# EUROPEAN PATENT APPLICATION

(11) **EP 1 500 455 A1**
(43) Date of publication of application: **26.01.2005**
(21) Application number: 04103535.3
(22) Date of filing: 23.07.2004
(51) Int. Cl.: B23K 1/19, B23K 35/02, C04B 37/00, C04B 37/02, B32B 15/04

(54) **Method for obtaining high-resistance brazed joints of multiple-layer composite materials of ceramic/ceramic and metal/ceramic type, and multiple-layer composite materials obtained through the said method**

(30) Priority: 24.07.2003 IT MI20031524
(71) Applicant: Ansaldo Ricerche S.p.A., 16161 Genova (IT)
(72) Inventor: Branca, Valentina, 16161 Genova (IT); Federici, Alberto, 16021 Bargagli (IT); Grattarola, Marco, 17019 Varazze (IT); Guarnone, Paola, 16156 Genova (IT)
(74) Representative: Gervasi, Gemma, Dr.

(57) **Abstract**

The present demand describes a method for obtaining high-resistance brazed joints of multiple-layer composite materials of metal/ceramic and ceramic/ceramic type, characterised in that the brazing alloy is enriched with a dispersed ceramic material compatible with the process, preferably with fibres or whiskers of said ceramic material.

## Description

### FIELD OF THE INVENTION.

The invention refers to an innovation of the high-temperature brazing method used for joining dissimilar materials having very different thermal expansion coefficients among each other, or similar materials but with an expansion coefficient very different from that of the brazing alloy. The natural application of the method is in the high-resistance brazed joints of multiple-layer composite materials (materials with a so-called sandwich structure) of a metal/ceramic and ceramic/ceramic type and in all those applications where the brazing material has physical and mechanical properties very different from those of the materials to be joined.

### STATE OF THE ART.

In many special applications it may be necessary to produce multiple-layer composite materials, joining together materials that have very different physical and mechanical properties. A typical example is in heat screens which work at a high temperature where the material has to have a high melting point and resistance to any aggressive phenomena in the environment, and at the same time good properties of thermal conductivity and thermal capacity. These screens generally consist of a multiple-layer composite material comprising a first layer of metal material with high conductivity and thermal capacity on which is applied a second layer of ceramic material with a protective function.

An important application of this technique is on the components facing the plasma of fusion reactors which have to dispose of as much as 20 MW/m2 and reach surface temperatures of more than 1000°C. These screens are composed of water-cooled elements in copper alloy protected with tiles of carbon fibre material. Other examples of application that use multiple-layer composite materials of the metal/ceramic type are, though without limitation, high-voltage switches, electrodes, moulds, walls of combustion chambers, high temperature sensors, etc. Other multiple-layer composite materials also used frequently in the art are instead obtained by joining together at least two ceramic layers, to obtain multiple-layer composite materials of the ceramic/ceramic type. Although this type of joint is less common, it is of great importance when, for reasons of complexity of shape or dimensions, it is necessary to compose a final component by joining several parts made separately. A typical example is the production of flanged ceramic pipes which, for technological reasons, cannot be made in one piece but must be assembled from pipes and separate flanges. Multiple-layer composite materials of the ceramic/ceramic type are thus obtained in which the first layer consists of the pipe, while the second layer consists of the flange which must be joined to the pipe. It is clear that, in this case, the resistance of the global joint obtained downstream by coupling the flanges of two adjacent pipes will depend, among other things, on the quality of the joint between the flange and the pipe, which otherwise will be a weak point in the global joint.

The method according to the present invention concerns multiple-layer composite materials of both types, that is of the ceramic/metal type and of the ceramic/ceramic type.

The ceramic materials of greatest technological interest both for joining to metal layers and for joining among each other, for example, AL2O3, SiC, TiN, TiC, TiO, Si3N4, ZrO2, but also C (for example in the form of graphite, diamond or carbon fibre) which in this technical field is considered a "ceramic" material on account of its resistance to high temperatures. Ceramic materials are used as such, or in the form of mixtures comprising different ceramic materials and/or different solid forms of the same.

Instead, among metal materials, metals and alloys are used that are resistant to heat in general, and with high thermal conductivity, including metals with a high melting point, that is the so-called "refractory metals" such as tungsten, molybdenum, vanadium, etc..

In multiple-layer composite materials of the two types mentioned above, the ceramic/ceramic and ceramic/metal joints are usually obtained by brazing at a high temperature. Brazing is a process which allows for the joining of two materials by inserting a third material with a lower melting point and with a suitable chemical composition which, melting and combining with the two surfaces to be joined, forms a consistent metallurgical bond and ensures excellent heat conductivity. Brazing alloys comprising titanium are usually used, especially for high-temperature applications. Various brazing alloys of this type are on the market in the form of pastes or thin foils (or laminas) (for example about 60 micrometers thick), for example the so-called active brazing alloys by WESGO, the trade names of which are Copper-ABA, Cusil-ABA, Cusin-ABA, Incusil-ABA, and Silver-ABA, in which the abbreviation ABA stands for "active brazing alloy". The resistance and the reliability of the brazed joint is a critical aspect in the development of multiple-layer composite components which use this technology. A problem shared by all the joints of dissimilar materials is the state of residual stress which is generated due to the different expansion coefficients. These residual stresses are greater the larger the difference in the thermal expansion coefficient of the two materials and the higher the brazing temperature. This state of stress, in addition to the working stress, may considerably decrease the resistance of the joint and it is not rare that it causes the destruction of the component even in the manufacturing phase. Generally the resistance of the joint may be considerably increased by creating between the two materials a zone which has intermediate physical and mechanical properties with respect to the two materials to be joined.

A method universally adopted to overcome the difficulties stated above is to insert a third material with suitable properties and thickness, but which makes it necessary to carry out double brazing, increasing the risk of having defects in the joint. Moreover, in the case of high edge applications in the field of heat transmission, the interface material may cause an intolerable increase of the global heat resistance.

Another method for improving the mechanical resistance that can be obtained consists of making recesses in the ceramic material with different geometric shapes and dimensions where the brazing material can work its way in, creating a zone of ceramic/brazing co-penetration with a gradual passage of the physical and mechanical properties from one material to the other. The processing of the surface of the ceramic material may be carried out in various ways, for example according to US 5,160,090 by means of the LASER realisation of conical shaped micro-holes on the ceramic surface. Another method for increasing the resistance of the brazed joint is to apply a suitable coating on the ceramic surface so as to create, before brazing, a surface layer more compatible with the brazing alloy. An example of this strategy can be seen in US 6,315,188 which describes a brazing method which comprises, as preliminary treatment of the surface to be brazed, the application of a metal layer of silicon on the ceramic surface, followed by the at least partial conversion (i.e. oxidation) of the previously formed metal layer into silicaceous material.

Although all these preliminary treatments bring a considerable improvement in the resistance of the multiple-layer composite material thus obtained, they are nevertheless laborious and often require sophisticated technologies which, through their respective investment costs, considerably affect the price of the multiple-layer composite material obtained. Moreover, not all the preliminary treatments can be carried out on all the materials subjected to brazing. Consequently, some of the preliminary treatments can be carried out only on one of the surfaces to be joined. For example, the method according to US 6,315,188 is not suitable for most metal substrates, as the conversion of the layer of silicon into silicaceous material can be only very scarce if carried out below approx. 1575°C, a temperature that is too high, especially for certain alloys with high thermal conductivity that are often used as a support for the construction of cooled heat shields. Moreover, here too, the alternative methods available for the at least partial oxidation of the silicon surface layer (chemical or plasma treatment, ionic bombardment) would end up by considerably affecting the end price of the product obtained.

A further disadvantage of the processes described above, for example in US 5,160,090, is that they still expose substrates (especially ceramic materials) to a risk of breakage, which involves a considerable economic loss if the substrates are made of special expensive high-tech ceramics, such as are often used in the sector.

The object of the present invention is therefore to provide a new method for obtaining brazed joints for multiple-layer composite materials of metal/ceramic and ceramic/ceramic type, which determines a higher mechanical resistance than simple brazing, that is without it being necessary to perform double brazing or special processing of the surfaces to be brazed. For many applications, it is of a particular interest that an increase of the mechanical resistance can be obtained in conditions in which the multiple-layer composite material obtained is subjected to considerable temperature gradients.

### SUMMARY.

The aim as above and further aims that will be more clearly apparent below are achieved by the method according to the present invention for obtaining high-resistance brazed joints for multiple-layer composite materials of ceramic/ceramic and metal/ceramic type, characterised in that the brazing alloy is enriched with a dispersed ceramic material compatible with the process, preferably with fibres or whiskers of said ceramic material. Preferably, the ceramic material compatible with the process is chosen from the group consisting of C, B, SiC, and Al2O3. With the method of the present invention, multiple-layer composite materials are obtained which are new and present improved features.

### DETAILED DESCRIPTION OF THE INVENTION.

According to the present invention, in brazed ceramic/ceramic and metal/ceramic joints, the state of stress on the interface may be considerably reduced and the resistance of the resulting joint may be considerably increased by means of a new and advantageous technology based on the enriching of the brazing zone with a dispersed ceramic material compatible with the process, preferably with fibres or whiskers of a ceramic material compatible with the process. Preferably, the ceramic material compatible with the process is chosen from the group consisting of C, B, SiC, and Al2O3. The object of the present invention is therefore to realise a method for making high-resistance ceramic/ceramic and ceramic/metal brazed joints using a technology that is less laborious and less expensive than the methods available in the current state of the art, in order to reduce the residual stresses and thus increase the mechanical resistance, especially under thermal stress, already in "simple" brazing, that is in brazing obtained without the use of extended materials interposing further interface layers (and consequent double brazing) and without performing any type of processing of the surfaces to be brazed. A further object of the present invention is to provide new multiple-layer composite materials.

The method according to the present invention is applicable to all the ceramic materials commonly used in the construction of multiple-layer composite materials, in particular to materials chosen from the group consisting of AL2O3, SiC, TiN, TiC, TiO, Si3N4, ZrO2 and C. Carbon may be used in all its forms, for example graphite, diamond or carbon fibre. The ceramic material subjected to brazing, as well as being used as such, may also be used in the form of a material composed of a mixture comprising different ceramic materials and/or different solid forms of same. For example, the ceramic material subjected to brazing may be a material composed of carbon fibres distributed in a carbon matrix, or distributed in a matrix of another ceramic material, for example chosen from the group that consists of Al2O3, SiC, TiN, TiC, TiO, Si3N4 or ZrO2.

The method according to the present invention can also be applied to all metal materials commonly used in the construction of multiple-layer composite materials and which are distinguished for their high heat resistance and high thermal conductivity, in particular carbon and low-alloyed steels, stainless steels, nickel alloys, copper and its alloys, titanium and its allows, zirconium and its alloys, super-alloys Ni-Co, tungsten, molybdenum and vanadium.

The method according to the present invention can also be applied to all brazing alloys commonly used in the construction of multiple-layer composite materials, in particular titanium alloys which include Ti and one or more of the elements chosen from the group consisting of Ag, Cu, and Ni as primary components (along with other secondary components such as Al and Si which may be present in smaller percentages) and which are identified, for example, by means of the following abbreviations listing their primary components: AgCuTi, CuTi, CuNiTi and NiTi. Among these, AgCuTi can be found in paste form, while CuTi, CuNiTi and NiTi can be found in the form of foils or laminas (thickness approx. 60 microns). Common examples of brazing alloys of the type mentioned above are the so-called active brazing alloys by WESGO, the trade names of which are Copper-ABA, Cusil-ABA, Cusin-ABA, Incusil-ABA, and Silver-ABA, in which the abbreviation ABA stands for "active brazing alloy".

The new technology consists of enriching the metal brazing materials with a dispersed ceramic material compatible with the process, preferably with fibres or whiskers of a ceramic material, preferably chosen from the group composed of C, B, SiC, and Al2O3. Preferably, the fibres or whiskers used have a diameter between 1 and 20 microns and a length of at least 50 microns. Even more preferably, the fibres or whiskers have a diameter between 5 and 15 microns and a length of at least 75 microns.

By adopting the new technology described here, both in the case of ceramic/metal brazings and in the case of ceramic/ceramic brazings, a significant reduction in the residual brazing stress is obtained, and therefore a considerable increase of the mechanical resistance, above all in conditions of thermal stress caused by the presence of high temperature gradients.

According to the present invention, the ceramic material compatible with the process used to enrich the brazing alloy is used in dispersed form, for example as a powder or as fibres or whiskers. Preferably, the fibres or whiskers of ceramic material compatible with the process are mixed homogeneously in the brazing alloys in paste form before their application on the materials to be joined, or the fibres or whiskers are uniformly distributed between two foils of brazing alloy in the case of brazing alloys in lamina form. In the first case, the present invention contemplates the following steps: (a) dispersion of fibres or whiskers of a ceramic material compatible with the process in the brazing alloy in paste form, (b) application of the brazing alloy in paste form comprising the fibres or whiskers on at least one of the surfaces of the two materials that are to be joined by brazing, (c) joining the two materials in such a way that the brazing alloy in paste form enriched with the fibres or whiskers is interposed between the two materials, and (d) carrying out brazing. Eventually, as a further intermediate step (b1), a further layer of brazing alloy in paste form, not enriched with fibres or whiskers, is applied on the first enriched layer, or on the other of the two surfaces of the two materials to be joined, before proceeding to step (c). In the second case, the present invention contemplates the following steps: (a) applying on the first of the materials to be joined by brazing, a first foil of brazing alloy, (b) laying, for example by the force of gravity or with electrostatic forces, a layer of fibres or whiskers of a ceramic material compatible with the process on the first foil of brazing alloy, (c) applying a second foil of brazing alloy on the layer of fibres or whiskers previously laid, (d) on the second foil of brazing alloy, applying the second of the materials that are to be joined by brazing, and (e) carrying out brazing. Eventually, as a further intermediate step (c1), further foils of brazing alloy (preferably at least one or two further foils) may be inserted to increase the total brazing thickness, before proceeding to step (d), placing the second material to be joined on the last of the inserted sheets of brazing alloy. The dimensions of the fibres and the percentage of enrichment of the brazing material with the ceramic material compatible with the process depend on the physical and mechanical properties of the materials, on the configuration of the joint and on the loads applied. There is generally an optimum percentage of enrichment which can be determined experimentally, and which varies between 1 and 10%, preferably between 2 and 5% of the weight, with reference to the total weight of the brazing alloy used. The fibres or the whiskers may be laid methodically in one direction if one wants to obtain orthotropic properties within the brazing plain, or they may be laid uniformly but in random directions if one wants to obtain isotropic properties within the brazing plain. As well as satisfying the physical and mechanical requirements, the material of which the fibres consists must also be compatible with the specific brazing process and with the environment in which the component will be employed.

Brazing according to the method of the present invention is carried out in the conditions described in the art, that is clearly at a temperature lower than the melting point of any metal support, but at a temperature equal to or higher than the melting point of the brazing alloy. However, the preferred temperature is around 800-1100° C. Preferably, work is carried out in a vacuum.

### EXPERIMENTAL PART.

Experimental tests were carried out in order to compare the resistance to thermal fatigue of a joint between a ceramic material composed of carbon fibre distributed in a matrix of carbon and copper-chrome-zirconium alloy using a brazing alloy CuTi, available on the market under the name Copper-ABA, in its natural state in one case and enriched with carbon fibres in the other. The test pieces, composed of blocks of carbon fibre material distributed in a carbon matrix with dimensions 20 mm x 20 mm x 6 mm brazed onto a water-cooled support of copper-chrome-zirconium, were subjected to a superficial heat flow varying cyclically between 0 and a maximum value with duration of the individual cycle longer than the response time of the test piece itself. The test pieces were brazed with the copper-titanium alloy in one case and with the same alloy enriched with 3% of its weight of carbon fibre in the second case. Enrichment was obtained by laying the correct quantity of carbon fibres on a first foil of brazing alloy which, after application of the fibres, was then covered with a second foil of brazing alloy. In a part of the samples tested, a third foil was then inserted on the side of the carbon fibre material in a carbon matrix. Instead, the comparative experimentation with only the brazing alloy was carried out with one, with two and also with three sheets of brazing alloy, superimposed in their natural state. The samples brazed with the alloy in its natural state were detached after a few cycles with a maximum heat flow of 10 MW/m² while those with the same alloy enriched with carbon fibres withstood to 1000 cycles with a heat flow of 10 MW/m² and an additional 400 cycles at 15 MW/m².

Comparable results were then obtained using pure copper supports instead of copper-chrome-zirconium alloy.

The test for checking the possible destruction of the brazing and detachment of the material from the support consists of brushing the surface of the ceramic coating (that is of carbon fibre in a carbon matrix) with a bundle of highly energetic electrons imposing an incident heat flow. During the test, the temperature of the surface exposed to the flow was monitored with an infrared television camera. If in a determined cycle the TV camera reveals an increase in temperature with respect to the previous cycle, this means that the joint is no longer able to transmit heat effectively and must therefore be considered "detached". In the specific case the increase in temperature is of some hundreds of degrees Centigrade and is completely developed in the space of 2-3 cycles.

## Claims

**1.** Method for obtaining high-resistance brazed joints of multiple-layer composite materials of ceramic/ceramic and metal/ceramic type, **characterised in that** the brazing alloy is enriched with a dispersed ceramic material compatible with the process.

**2.** Method according to claim 1, **characterised in that** the brazing alloy is enriched with fibres or whiskers of a ceramic material compatible with the process.

**3.** Method according to the first or second claim wherein the ceramic material subjected to brazing is chosen from the group consisting of AL2O3, SiC, TiN, TiC, TiO, Si3N4, ZrO2, and C.

**4.** Method according to claim 3 wherein the ceramic material subjected to brazing is a material composed of a mixture comprising different ceramic materials and/or different solid forms of same.

**5.** Method according to claim 4 wherein the ceramic material subjected to brazing is a material composed of carbon fibres distributed in a carbon matrix.

**6.** Method according to one or more of the previous claims wherein the metal material subjected to brazing is chosen from the group consisting of carbon and low-alloyed steels, stainless steels, nickel alloys, copper and its alloys, titanium and its allows, zirconium and its alloys, super-alloys Ni-Co, tungsten, molybdenum and vanadium.

**7.** Method according to one or more of the previous claims wherein the fibres or the whiskers of ceramic material compatible with the process are chosen from the group composed of fibres or whiskers of C, B, SiC and Al2O3.

**8.** Method according to one or more of the previous claims wherein the ceramic material compatible with the process, used to enrich the brazing alloy, is used in a quantity between 1 and 10%, preferably between 2 and 5% of the weight, with reference to the quantity of brazing alloy used.

**9.** Method according to one or more of the previous claims wherein the brazing alloy is chosen from the group consisting of titanium alloys, preferably titanium alloys comprising one or more of the elements chosen from the group consisting of Ag, Cu and Ni, such as for example the alloys AgCuTi, CuTi, CuNiTi and NiTi.

**10.** Method according to claim 9 wherein the brazing alloy is in paste form.

**11.** Method according to claim 9 wherein the brazing alloy is in foil form.

**12.** Method according to claim 10 wherein the fibres or the whiskers are dispersed in the brazing alloy paste to obtain enrichment prior to brazing.

**13.** Method according to claim 11 wherein the fibres or the whiskers are distributed uniformly between two foils of brazing alloy to obtain the enrichment of the brazing alloy at the time of brazing.

**14.** Method according to claim 12, comprising the following steps:
(a) dispersion of the fibres or whiskers in the brazing alloy in paste form,
(b) application of the brazing alloy in paste form comprising the fibres or whiskers on at least one of the surfaces of the two materials that are to be joined by brazing,
(c) joining the two materials in such a way that the brazing alloy in paste form enriched with the fibres or whiskers is interposed between the two materials, and
(d) carrying out brazing.

**15.** Method according to claim 14 inserting a further step (b1), which consists of applying a further layer of non enriched brazing alloy on the first enriched layer, or on the other of the two surfaces of the two materials to be joined, before proceeding to step (c).

**16.** Method according to claim 13, comprising the following steps:
(a) applying on the first of the materials to be joined by brazing, a first foil of brazing alloy,
(b) laying a layer of fibres or whiskers on the first foil of brazing alloy,
(c) applying a second foil of brazing alloy on the layer of fibres or whiskers previously laid,
(d) on the second foil of brazing alloy, applying the second of the materials that are to be joined by brazing, and
(e) carrying out brazing.

**17.** Method according to claim 16, inserting the further step (c1) which consists of applying at least one further foil of brazing alloy on the second foil as in step (c) before proceeding to step (d).

**18.** Multiple-layer composite material of ceramic/ceramic and metal/ceramic type comprising at least one high-resistance brazed joint, obtained according to the method of one or more of the previous claims.

**18.** Multiple-layer composite material of ceramic/ceramic and metal/ceramic type according to claim 18 comprising at least one brazed joint wherein the brazing alloy is enriched with a dispersed ceramic material compatible with the process.
